# EUROPÄISCHE PATENTSCHRIFT

(11) **EP 1 570 740 B1**
(45) Veröffentlichungstag und Bekanntmachung des Hinweises auf die Patenterteilung: **16.07.2008**
(21) Anmeldenummer: 05004481.7
(22) Anmeldetag: 01.03.2005
(51) Int. Cl.: A22C 11/02

(54) **Verfahren und Vorrichtung zum Befüllen einer Hülle**
Method and apparatus for stuffing a casing
Procédé et appareil pour le remplissage d'un boyau

(30) Priorität: 02.03.2004 EP 04004849
(43) Veröffentlichungstag der Anmeldung: 07.09.2005
(73) Patentinhaber: Albert Handtmann Maschinenfabrik GmbH & Co. KG, 88400 Biberach (DE)
(72) Erfinder: Schmid, Klaus, 88499 Daugendorf (DE)
(74) Vertreter: Grünecker, Kinkeldey, Stockmair & Schwanhäusser Anwaltssozietät

(56) Entgegenhaltungen:
- EP-A- 0 885 565
- EP-A- 1 014 799
- WO-A-98/20746
- US-A1- 2002 042 247

## Beschreibung

Die Erfindung bezieht sich auf ein Verfahren und eine Vorrichtung zum Befüllen einer Hülle, insbesondere zum Befüllen einer Wursthülle mit Wurstmasse, der in den Oberbegriffen der Ansprüche 1 und 6 erläuterten Art.

Eine derartige Vorrichtung und ein derartiges Verfahren sind aus der US 2002/042247 A1 bekannt. Das bekannte Verfahren und die bekannte Vorrichtung dienen zum Befüllen schlauchförmiger Wursthüllen mit Wurstmasse, wobei die Vorrichtung ein Füllrohr mit einer Ausstoßöffnung aufweist, durch die die Wurstmasse in die Hülle hineingedrückt wird. Ein Vorrat der Hülle wird über das Füllrohr gezogen und gerafft (als sogenannte Darmraupe), wobei diese Falten beim Befüllen der Hülle auseinandergezogen werden, so dass anschließend die Hülle glatt und eben das Füllgut umgibt. Unmittelbar nach der Ausstoßeinrichtung greift eine Einschnüreinrichtung an der bereits mit Füllgut befüllten Hülle an und schnürt die Hülle nach vorgegebenen Portionslängen ein, so dass sich ein Portionslängenstrang ergibt, der aus einzelnen Portionslängen besteht, die miteinander noch über die Einschnürstelle verbunden sind. Um zu verhindern, dass beim Reißen einer Hülle zu viel Füllgut austritt, das nicht mehr verwendet werden kann, wird der Zustand des Füllgutes in der Hülle überwacht, basierend auf der Tatsache, dass das Füllgut die Hülle zu einem vorgegebenen Durchmesser spannt, wobei ein Abweichen vom vorgegebenen Durchmesser als Anzeichen dafür gewertet wird, dass die Hülle geplatzt ist. Der Durchmesser wird durch Abtasten der äußeren Oberfläche des Portionsstranges festgestellt, wobei die unterschiedlichsten Sensoren verwendet werden. Um jedoch zu verhindern, dass eine Einschnürstelle, an der sich der Durchmesser stark verringert, als Fehler interpretiert wird, ist die Steuerung so ausgelegt, dass Messungen entweder nicht im Bereich der Einschnürungen vorgenommen oder durch die Steuerung ignoriert werden. Die Messung erfolgt weiterhin bevorzugt in einem begrenzten Zeitfenster, wobei alle Messpunkte aus diesem Zeitfenster gemittelt werden, bevor sie mit einem vorgegebenen Durchmesserbereich verglichen werden und ein Fehlersignal erzeugt wird, wenn der gemittelte Durchmesser aus dem vorgegebenen Durchmesserbereich fällt. Mit dem bekannten Verfahren und der bekannten Vorrichtung werden somit die Einschnürstellen nicht überwacht.

Die EP-A-885 565 beschreibt ein Verfahren und eine Vorrichtung zum Befüllen einer Wursthülle, wobei eine Füllmaschine mit einem Füllrohr verwendet wird, durch das das Wurstbrät in eine Wursthülle ausgestoßen wird. Die gefüllte Wursthülle wird durch Endlosbänder mit einer vorbestimmten, auf die Füllmenge abgestimmten Geschwindigkeit abgezogen. Die Geschwindigkeit wird über eine Steuerung gesteuert. Die Steuerung steht weiterhin mit einer Druckdose in Verbindung, die unmittelbar am Auslass des Füllrohres angeordnet ist und die Kompressibilität des Wurstbräts misst. Die festgestellte Kompressibilität wird zur Steuerung der Geschwindigkeit des Antriebs für die Endlosbänder eingesetzt. Dies muss jedoch auf jeden Fall vor jedem Abschnüren geschehen.

Aus der GB-A-1 090 390 ist ein Verfahren und eine Vorrichtung zum Verpacken von Lebensmitteln, insbesondere zum Füllen einer Hülle mit Wurstmasse, beschrieben. Die Vorrichtung enthält eine Einrichtung zum Vergleichmäßigen des Gewichts der fertig eingeschnürten Portionslängen. Zu diesem Zweck durchläuft der noch nicht eingeschnürte, befüllte Strang eine Kalibrierungshülse, mit der eine vorbestimmte Druckkraft auf den Strang ausgeübt werden kann, so dass sich die Füllung gleichmäßig in der Hülle verteilt. Weiterhin wird das Gewicht durch Anpressrollen überwacht. Eine Einrichtung zum Überwachen der Hülle ist nicht vorgesehen.

Die DE-A-102 21 198 beschreibt eine Vorrichtung und ein Verfahren zum Herstellen von Würsten, mit der das Ende der gerafft auf dem Füllrohr sitzenden Hülle angezeigt werden kann. Die Vorrichtung enthält einen Schieber, der das der Ausstoßöffnung abgewandte Ende der Hülle sanft beaufschlagt und der Hülle bis zur Ausstoßöffnung folgt. Am Schieber ist ein Sensor befestigt, durch den die Position des Schiebers und somit die zur Verfügung stehende Restlänge der Hülle bestimmt werden kann. In der Nähe der Ausstoßöffnung ist ein weiterer Sensor angeordnet, der feststellt, wenn der Schieber an der Ausstoßöffnung angekommen ist und einen Alarm auslöst. Fehlerhafte oder gerissene Hüllen sind mit dieser Einrichtung nicht feststellbar.

Die WO98/20746 beschreibt ein Verfahren und eine Vorrichtung zum Herstellen wurstartiger Produkte mit schlauch- oder beutelförmiger Verpackungshülle. Die Vorrichtung enthält Sensoren, die den Zustand der Hülle über den Zustand des Hüllgutes überwachen. Neben einer Lichtschranke oder einem Tastschalter zum Erfassen eines einzigen Wertes für den Durchmesser der Wurst ist bevorzugt ein Sensor vorgesehen, der die Prallheit der Verpackungshülle auch während des Verschließens erfasst. Zu diesem Zweck ist ein Stempel vorgesehen, der an seinem vorderen Ende eine Tastfläche aufweist, die mit einem vorbestimmten Druck auf die befüllte Hülle gedrückt wird. Dabei wird der vom Stempel zurückgelegte Weg als auch die zum Bewegen des Stempels erforderliche Kraft erfasst und an die Steuereinheit weitergeleitet. Entsprechen diese Werte nicht den Sollwerten, so wird ein Fehlersignal erzeugt. Aber auch hier ist eine Überwachung im Bereich einer Einschnürstelle nicht möglich.

Weiterhin zeigt die DE-A-100 15 893 eine Vorrichtung, die eine Messeinrichtung enthält, mit der festgestellt werden soll, ob die Hülle intakt ist oder ob der Vorrat der Hülle auf dem Füllrohr zur Neige geht. Die Messeinrichtung enthält einen berührungslos arbeitenden Sensor, der auf einen Messpunkt entlang des Füllrohrs gerichtet ist und dort zeitabhängig die Lage der Hülle am Messpunkt bestimmt. Die Lage des Messpunktes im Bereich der gerafften Hülle hat den Vorteil, dass, verglichen mit der dünnen Wandstärke der Hülle, ein größerer Durchmesserunterschied zwischen dem Außendurchmesser der gerafften Hülle und dem Außendurchmesser des Füllrohrs bzw. der Hülse besteht, der durch Messeinrichtungen leicht und genau feststellbar ist. Die Bestimmung des Hüllenendes und/oder die Bestimmung, ob sich auf dem Füllrohr überhaupt noch ein Vorrat an geraffter Hülle befindet, ist somit mit der bekannten Vorrichtung leicht vorzunehmen. Zerrissene oder geplatzte Hüllen sind jedoch nur dann zweifelsfrei zu erkennen, wenn diese bereits im Bereich der Darmraupe vorhanden sind und zu merklichen Durchmesserunterschieden führen, was nicht immer der Fall ist.

Der Erfindung liegt somit die Aufgabe zugrunde, ein Verfahren und eine Vorrichtung bereitzustellen, mit denen Beschädigungen der Hülle auch an schwer zugänglichen Stellen leicht und einfach zu erkennen sind.

Die Aufgabe wird durch ein Verfahren mit den Merkmalen des Anspruchs 1 und eine Vorrichtung mit den Merkmalen des Anspruches 6 gelöst.

Durch die erfindungsgemäße Ausgestaltung ist es nunmehr möglich, alle Fehlstellen der Hülle festzustellen, und zwar auch solche, bei denen die Hülle an der Einschnürstelle geplatzt ist und nur unwesentlich Füllgut austritt, das jedoch trotzdem dazu führt, dass beispielsweise Würste nicht mehr verkaufsfähig sind. Mit der erfindungsgemäßen Ausgestaltung wird die Hülle komplett über die Portionslänge und die Einschnürstelle überwacht, so dass alle Abweichungen festgestellt werden können.

Bevorzugt wird dies durch die Bestimmung einer Istfläche oder Istkontur in Axialrichtung über die Portionslänge und die Einschnürstelle durchgeführt. Mit dem Begriff "Istkontur" ist der Verlauf der äußeren Form des ausgestoßenen Füllgutes und demzufolge der Hülle am Außenumfang der Hülle gemeint; mit "Istfläche" der Flächeninhalt, wie er sich beispielsweise durch eine Projektion des Außenumfangs auf eine senkrecht stehende Ebene ergeben würde. Dabei ist es ausreichend, die Istkontur nur an einer Seite der Längsachse der Portionslänge und der Einschnürstelle festzustellen. Die festgestellte Istkontur wird dann mit einer Sollkontur verglichen.

Der Sollwert wird bevorzugt aus Betriebsparametern des Befüllvorgangs errechnet, kann jedoch auch experimentell festgestellt werden.

Um unnötige Fehlermeldungen bei zu geringen Abweichungen zu vermeiden, kann der Sollwert als Hüllkurve mit einer oberen und einer unteren Grenzkurve bereitgestellt werden.

Die Bestimmung des Istwertes erfolgt bevorzugt kontinuierlich.

Als Sensor wird bevorzugt ein optischer Sensor, also z.B. ein Lasersensorsystem, insbesondere ein reflektierender Flächenerkennungslasersensor eingesetzt, da damit auf konstruktiv einfache, preiswerte Weise die Form und/oder der Verlauf erkannt werden kann. Es sind jedoch auch andere bildgebende Sensoren einsetzbar.

Ausführungsbeispiele der Erfindung werden nachfolgend anhand der Zeichnungen näher erläutert. Es zeigen:
- Fig.1: eine schematische Darstellung eines ersten Ausführungsbeispiels der Erfindung bei intakter Hülle,
- Fig. 2: die Vorrichtung nach Fig. 1 bei geplatzter Hülle,
- Fig. 3: eine Darstellung ähnlich Fig. 1 eines weiteren Ausführungsbeispiels einer erfindungsgemäß ausgerüsteten Vorrichtung,
- Fig. 4: eine schematische Teildarstellung einer erfindungsgemäßen Vorrichtung,
- Fig. 5: die grafische Darstellung eines Sollwerts, und
- Fig. 6: die grafische Darstellung eines Istwerts.

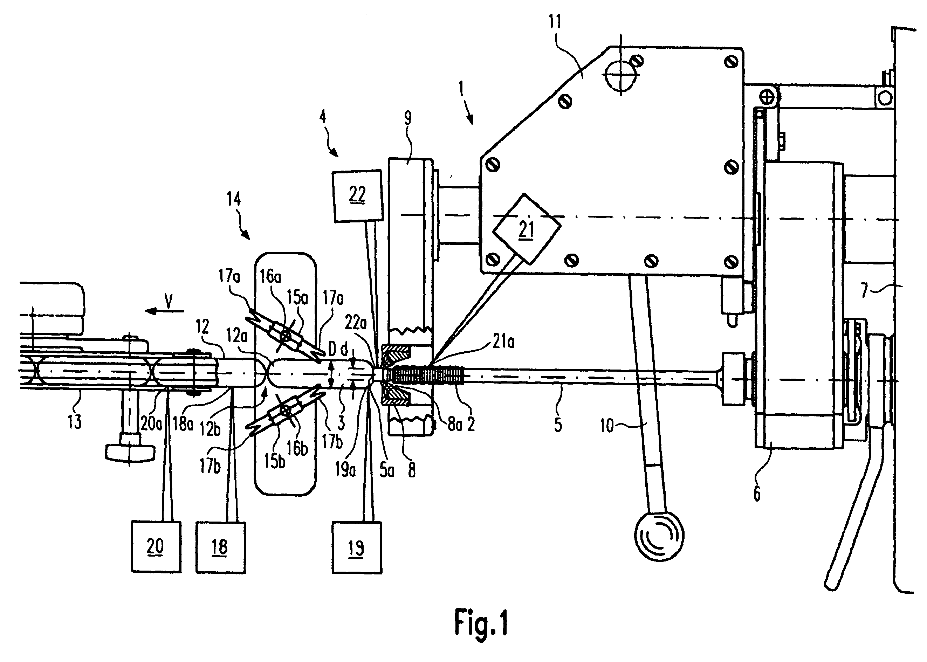

In Fig. 1 sind in schematischer Darstellung die für die Erfindung wesentlichsten Teile einer Vorrichtung 1 zum automatischen Befüllen einer Hülle, insbesondere einer schlauchförmigen Hülle 2 mit einem pastösen, fließfähigen oder anderweitig formbaren Füllgut 3 gezeigt. Die Vorrichtung 1 ist im dargestellten Ausführungsbeispiel als Vorrichtung zum Befüllen einer Wursthülle, d.h. eines Darms (Natur-, Collagen- und Kunstdarm) mit einer Wurstmasse (Wurstbrät) ausgebildet und enthält neben einer Überwachungseinrichtung 4 die bei diesen Vorrichtungen üblichen Bestandteile, also insbesondere ein Füllrohr 5, das über einen Füllrohrdrehantrieb 6, der an einem Maschinenhauptteil 7 befestigt ist, um seine Längsachse gedreht werden kann. Das Füllrohr 5 weist eine Ausstoßöffnung 5a mit einem Durchmesser d an seinem dem Drehantrieb 6 entgegengesetzten, freien Ende auf. Das Füllrohr 5 ist in der Nähe dieses Endes mit einer sogenannten Darmbremse 8 mit einem Bremsring 8a versehen, durch die die geraffte Hülle 2 durch den Füllgutausstoß abgezogen wird. Die geraffte Hülle 2 wird bei Bedarf manuell oder von einem nicht dargestellten Schieber nachgeschoben. Die Bremse 8 bzw. deren Bremsring 8a wird über ein Bremsringgetriebe in einem Gehäuse 9 synchronisiert mit dem Füllrohr 5 drehend angetrieben. Es reicht jedoch aus, wenn entweder die Bremse 8 oder das Füllrohr 5 angetrieben wird. Mit Hilfe eines Handhebels 10, der an einer Halterung 11 für das Getriebegehäuse 9 angreift, kann das Bremsringgetriebe so verschwenkt werden, dass die Ausstoßöffnung 5a zum Aufziehen einer neuen Hülle 2 oder zum Reinigen freigelegt wird.

Im Betrieb wird Füllgut 3 in bekannter Weise in Richtung des Pfeiles V durch das Füllrohr 5 und aus der Ausstoßöffnung 5a in die Hülle 2 zum Ausbilden eines Füllgutstrangs 12 gedrückt. Dabei ist das Ende der Hülle 2 auf der dem Füllrohrende 5a zugewandten Seite verschlossen bzw. zumindest umgelegt, so dass das Füllgut 3 beim Ausstoß einerseits nicht in diese Richtung aus der Hülle austreten kann und andererseits die Hülle 2 durch die Darmbremse 8 hindurch abzieht. Der Füllgutstrang 12 wird durch eine Transporteinrichtung 13 in Richtung des Pfeiles V mit einer vorbestimmten Geschwindigkeit vom Füllrohr 5 abgezogen und gegen Verdrehen gesichert. Da das Abziehen der Hülle 2 langsamer erfolgt als der Ausstoß des Füllgutes 3 tritt im Füllgutausstoß ein gewisser Rückstau auf, der bewirkt, dass Füllgut 3, das durch die Ausstoßöffnung 5a mit dem Durchmesser d ausgestoßen wird, zur Seite quillt und die Hülle 2 nunmehr mit dem größeren Durchmesser D ausfüllt.

Zwischen der Transporteinrichtung 13 und der Ausstoßöffnung 5a ist eine Einschnüreinrichtung 14 vorgesehen, durch die der Füllgutstrang 12 in einzelne Portionslängen oder Abschnitte 12a unterteilt werden kann. Die Einschüreinrichtung 14 kann jede geeignete Einrichtung sein und ist im dargestellten Ausführungsbeispiel eine Verdrängereinheit mit zwei Verdrängerelementen 15a und 15b, die jeweils um eine Achse 16a und 16b verdrehbar sind und mit gegeneinander arbeitenden Verdrängerflügeln 17a und 17b den Füllgutstrang 12 von zwei gegenüberliegenden Seiten her einschnüren, wodurch an dieser Stelle das Füllgut 3 im Inneren der Hülle 2 verdrängt wird. Die Hülle 2 zwischen dem Bremsring 8a und der Transporteinrichtung 13 wird beim Drehen des Füllrohrs 5 und/oder des Bremsrings 8a verdreht und steht somit unter Vorspannung, die sich entspannen kann, sobald das Füllgut 3 an einer vorbestimmten Stelle verdrängt wurde. An der Einschnürstelle wird sich somit die Hülle 2, eine intakte Hülle vorausgesetzt, zum Abschnüren der Abschnitte 12a verdrehen, und eine bleibende Einschnürung 12b im Füllgut 3 hinterlassen.

Die Überwachungseinrichtung 4 enthält eine erste Sensoreinrichtung 18, die so ausgewählt wurde, dass sie bevorzugt berührungsfrei einen Istwert einer Form und/oder eines Verlaufs des Zustandes des ausgestoßenen Füllguts 3 über die Einschnürstelle 12b und den Abschnitt 12a feststellt. Die Sensoreinrichtung ist bevorzugt ein optischer Sensor, z.B. ein Lasersensorsystem, kann jedoch auch ein bildgebendes System oder dgl. sein. Die Form und/oder der Verlauf wird bevorzugt durch die Bestimmung eines Istwertes einer Reflexionsfläche bzw. einer Kontur, d.h. des Verlaufs einer axial zum Füllgutstrang 12 verlaufenden Linie der Fläche , die der äußeren Form des Füllgutstranges 12 folgt, bestimmt. Für diesen Zweck eignen sich besonders ein reflektierender Lasersensor, insbesondere ein reflektierender Flächenerkennungslasersensor. Beim reflektierenden Flächenerkennungslasersensor befindet sich der Sender und der Empfänger im gleichen Gehäuse. Das Messobjekt, in diesem Fall der Füllgutstrang 12, befindet sich in einem definierten Abstand vor dem Sensor. Der Sender sendet Laserlicht aus und der Empfänger empfängt das reflektierte Licht und kann somit die Fläche des Messobjekts und den Abstand zum Messobjekt erfassen. Aus der Fläche und/oder der Begrenzung der Fläche wird dann der Istwert ermittelt.

Ein besonders bevorzugter Sensor für die erste Sensoreinrichtung 18 ist ein Lasersensor vom reflektierenden Typ zur breitflächigen Erkennung, beispielsweise ein Laser-Flächenerkennungssensor vom Typ LV-H 47 der Firma Keyence, der eine tiefenbegrenzte, breitflächige Flächenerkennung möglich macht. Dieser Sensor arbeitet mit einem sichtbaren, roten Halbleiterlaser mit der Wellenlänge 650 nm, maximal 3 mW, einer Pulslänge von 3,5 µs und ist geeignet für einen Messabstand von 55 bis 85 mm und verwendet dafür eine Linienbreite von ca. 20 bis 25 mm.

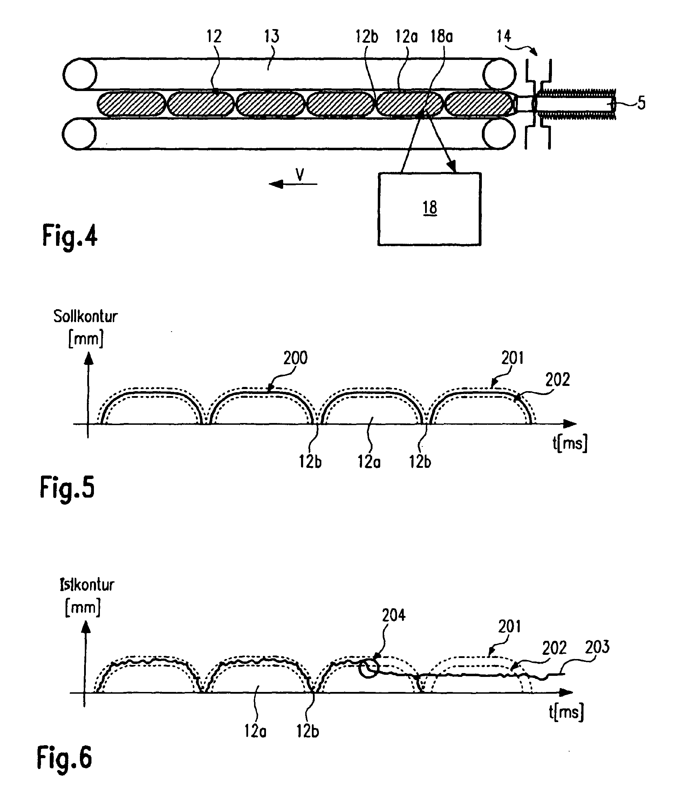

Wie auch in Verbindung mit Fig. 4 ersichtlich, ist die Sensoreinrichtung 18 auf einen Messpunkt 18a gerichtet, der von den bereits beidseitig mit Einschnürungen 12b abgeschnürten Abschnitten 12a passiert wird. Trotzdem sollte die Messstelle 18a möglichst nahe an der Ausstoßöffnung 5a liegen.

Die Sensoreinrichtung 18 ist auf nicht gezeigte Weise mit einer Steuerung der Vorrichtung verbunden und kann, wie dies nachfolgend noch näher erläutert wird, beispielsweise ein Abschalten der gesamten Vorrichtung 1 oder einzelner Teile davon, wie beispielsweise der Transporteinrichtung 13, des Drehantriebs 6, des Füllrohrs 5 oder des Nachschubs an Füllgut 3 durch das Füllrohr 5 bewirken.

Die Funktion der ersten Sensoreinrichtung 18 wird nachfolgend anhand der Fig. 4 bis 6 erläutert.

Der Steuereinrichtung wird ein Sollwert der Form und/oder des Verlaufs vorgegeben. Der Sollwert wird bevorzugt aus Betriebsparametern der Vorrichtung errechnet, wobei in die Rechnung alle oder zumindest die wesentlichsten Betriebsparameter eingehen, die die zu überwachende Form und/oder den Verlauf bestimmen. Dies können beispielsweise sein die Durchsatzmenge des Füllguts, der Innendurchmesser der Hülle, die Dehnungseigenschaften der Hülle, die Konsistenz des Füllguts, der erwartete oder eingestellte Rückstau, der erwartete Durchmesser im Bereich der Einschnürstelle, usw.. Da der Füllgutstrang um seine Längsachse im Wesentlichen symmetrisch ist, reicht es, den Sollwert gemäß Fig. 5 über den halben Durchmesser des Füllgutstrangs 12 zu erstellen. Wie Fig. 5 zeigt, gibt der Sollwert die äußere Form oder Begrenzung des an der Messstelle 18a vorbeilaufenden Füllgutstrangs 12 kontinuierlich und vollständig über den Abschnitt 12a und die Einschnürung 12b wieder. In Fig. 5 durchgezogen gezeichnet ist eine erste Kurve 200, die dem errechneten oder auf sonstige Weise bestimmten Sollwert entspricht. Die Sollwertkurve liegt jedoch als Hüllkurve mit einer oberen Grenzkurve 201 und einer unteren Grenzkurve 202 vor, die aus der Sollkurve 200 unter Berücksichtigung von tolerierbaren Abweichungen berechnet wurden. Im dargestellten Ausführungsbeispiel sind die oberen und die unteren Grenzkurven 201, 202 über den Abschnitt 12a und die Einschnürung 12b symmetrisch und im gleichen Abstand zur berechneten Kurve 200 angeordnet. Es ist jedoch auch möglich, die oberen und unteren Grenzkurven 201 bzw. 202 in einem unterschiedlichen Abstand zur berechneten Kurve 200 anzuordnen. So ist es beispielsweise möglich, entweder im Bereich der oberen oder im Bereich der unteren Grenzkurve 201 bzw. 202 entweder durchgehend konstant über den Abschnitt 12a und die Einschnürung 12b oder nur bereichsweise im Abschnitt 12a oder in der Einschnürung 12b einen unterschiedlichen Abstand zur bestimmten Sollwertkurve 200 festzulegen.

Obwohl Fig. 5 eine fortlaufende Mehrzahl von Abschnitten 12a und Einschnürungen 12b zeigt, ist es ausreichend, den Sollwert in Form der Kontur und/oder der Fläche eines einzigen Abschnitts 12a und der anliegenden Einschnürungen 12b vorzugeben.

Fig. 6 zeigt die an der Messstelle 18a von der Sensoreinrichtung 18 festgestellte Istwertkurve 203, wie sie vom Füllgutstrang 12 über den Abschnitt 12a und die Einschnürung 12b genommen wurde. Im dargestellten Ausführungsbeispiel erfolgt die Bestimmung der Istwertkurve 203 kontinuierlich und an jedem Abschnitt 12a und jeder Einschnürung 12b, die an der Messstelle 18a vorbeiläuft. Wie Fig. 6 deutlich zeigt, liegt die Istwertkurve 203 zunächst zwischen den Grenzkurven 201 und 202, liegt somit in einem Bereich, der als intakt erkannt wird und keine Änderungen der Steuerung der Vorrichtung 1 erfordert. An der Stelle 204 fällt jedoch die Istwertkurve 203 aus dem Bereich zwischen den Grenzkurven 201 und 202 heraus, wie dies regelmäßig dann geschieht, wenn die Hülle 2 fehlerhaft ist und das Füllgut 3 nicht einschließen kann. Diese Abweichung der Istwertkurve 203 wird somit als Defekt interpretiert und leitet die vorgesehenen Notfallmaßnahmen ein, schaltet also beispielsweise entweder die gesamte Vorrichtung ab oder nur Teile davon, löst einen Alarm aus oder dgl..

Die Fig. 5 und 6 zeigen die Soll- bzw. Istwerte der Form bzw. des Verlaufs über jeweils nur den halben Durchmesser, d.h. die halbe Querschnitts- bzw. Reflexionsfläche. Mit dem oben erwähnten, breitflächig arbeitenden Flächenerkennungssensor ist es jedoch möglich, die gesamte Reflexionsfläche über den gesamten Durchmesser des Füllgutstranges festzustellen. Auf diese Weise können Abweichungen eliminiert werden, die nicht auf eine defekte bzw. fehlende Hülle zurückzuführen sind, beispielsweise Krümmungen der Abschnitte 12a entlang ihrer Längsachse. Weiterhin ergibt sich bei der Berücksichtigung der gesamten Fläche ein größerer Unterschied der Messsignale zwischen den Durchmessern einer intakten Hülle und den Durchmessern des Füllgutes bei defekter Hülle, was die Messgenauigkeit verbessert.

Um zu verhindern, dass die oben erwähnte Krümmung der Abschnitte oder andere Unregelmäßigkeiten, wie beispielsweise ein eventuell auftretender seitlicher Versatz, fälschlich als geplatzte Hülle interpretiert werden, ist es weiterhin möglich, mehrere Sensoren vorzusehen und diese so anzuordnen, dass sie feststellen können, ob beispielsweise einer Zunahme eines Messsignals an einer Stelle eine Abnahme des Messsignals an einer anderen Stelle entspricht. Diese Sensoren werden bevorzugt beidseitig einander entgegengesetzt angeordnet, und deren Signale werden addiert, so sich Zunahmen und gleichzeitige Abnahmen ausgleichen, so dass in der Summe der Istwert wieder innerhalb der Hüllkurve liegt.

Die Mehrfachanordnung von Sensoren für einen Messpunkt ist besonders dann zweckmäßig, wenn beispielsweise Sensoren verwendet werden, die nur über den halben Durchmesser bzw. die halbe Fläche (bezüglich der Längsachse) des Füllstrangs 12 messen. Beispiele für derartige Sensoren sind Laser-Triangulationssensoren, die in besonderer Weise zur Messung eindimensionaler Profilverläufe bzw. zur Aufnahme zweidimensionaler Profilbilder geeignet sind. Ein Beispiel eines Laser-Triangulationssensor ist ein laseroptischer Triangulationssensor vom Typ YP 11 MGV 80 der Firma Wenglor. Dieser optoelektronische Sensor sendet gepulstes Laserlicht aus. Befindet sich ein Gegenstand im Arbeitsbereich des Sensors, so wird über eine Auswerteelektronik der Abstand gemessen und in eine proportionale Ausgangsspannung gewandelt. Befindet sich kein Objekt vor dem Sensor oder ist die Oberfläche zu dunkel oder wird der Messbereich überschritten, wird der Fehlerausgang aktiviert und die Analogspannung abgeschaltet.

Die Überwachungseinrichtung 4 ist im dargestellten Ausführungsbeispiel mit einer Vielzahl von weiteren Sensoren 19, 20, 21 und 22 versehen. Jeder der Sensoren 19 bis 22 ist auf nicht gezeichnete Weise ebenfalls mit der Steuerung der Vorrichtung 1 verbunden und kann beispielsweise ein Abschalten der Transporteinrichtung 13, des Drehantriebs 6 des Füllrohres 5 und des Nachschubs an Füllgut 3 durch das Füllrohr 5 bewirken.

Jeder der Sensoren 19 bis 22 ist auf eine Messstelle 19a, 20a, 21 a und 22a gerichtet, wobei sich die Messstellen 19a und 20a stromabwärts der Ausstoßöffnung 5a befinden, wo sich das Füllgut 3 bereits in der Hülle 2 befindet und die äußere Form und die Abmessung des Füllgutstroms 12 durch eine intakte Hülle 2 und/oder eine erfolgreich vorgenommene Bearbeitung bei intakter oder intakt gebliebener Hülle 2 bestimmt wird. Der Zustand der Hülle 2 kann somit indirekt über den Zustand des Füllgutes 3, d.h. dessen Abmessung, Form, Formänderung, Regelmäßigkeit in Abmessung und Form usw. bestimmt werden.

Die Messstelle 19a befindet sich an einer Stelle, wo bereits eine Durchmesservergrößerung des Füllgutes 3 vom Durchmesser d der Ausstoßöffnung 5a auf den Durchmesser D innerhalb des Füllgutstranges 12 festgestellt werden kann oder an einer Stelle, wo der Durchmesser D bereits erreicht ist. Die Messstelle 19a liegt somit in Abzugsrichtung V stromabwärts der Ausstoßöffnung 5a und bevorzugt kurz unterhalb der Ausstoßöffnung 5a.

Die Messstelle 20a liegt an einer Stelle stromabwärts der Einschnüreinrichtung 14, d.h. an einer Stelle, wo eine Einschnürung 12b bereits fertiggestellt oder so weit fortgeschritten ist, dass sie durch einen Sensor zweifelsfrei festgestellt werden kann. Die Messstelle 20a kann alternativ oder zusätzlich zur Messstelle 19a vorgesehen sein.

Zusätzlich zu den Sensoren 19 und 20 sind die Sensoren 21 und 22 vorgesehen, wobei der Sensor 21 eine Messstelle 21 a im Bereich der gerafften Hülle definiert, wie dies beispielsweise in der DE-A-100 15 893 beschrieben wurde, deren Offenbarung hiermit durch Bezugnahme eingeschlossen wird. An der Messstelle 21 a kann beispielsweise das Ende der Hülle 2 auf dem Füllrohr 5 festgestellt werden. An der Messstelle 22a kann festgestellt werden, ob sich die Hülle dreht und/oder axial bewegt.

Bevorzugt alle weiteren Sensoren 19 bis 22 arbeiten berührungsfrei. Es kann jeder Sensor verwendet werden, der geeignet ist, Abstände oder Durchmesser bzw. einen Verlauf, d.h. eine Bewegung, oder Formen zu erkennen. Dies können beispielsweise sein: Lichtschranken, Lichttaster, Laser, Ultraschall- oder Zeilensensoren, sowie bildverarbeitende Systeme.

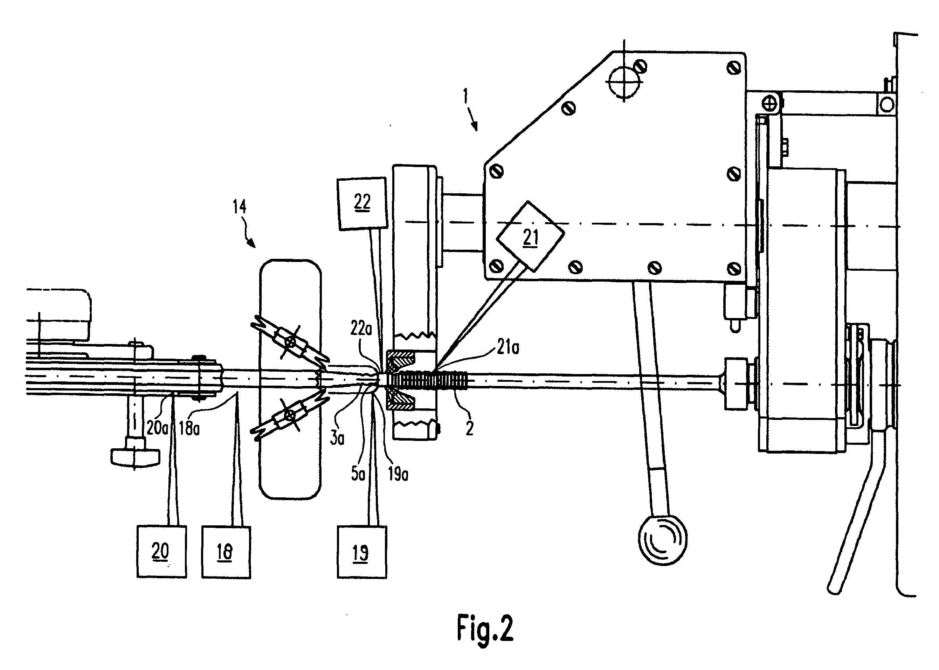

Die Funktion der weiteren Sensoren 19 bis 22 der Überwachungseinrichtung 4 wird nachfolgend anhand Fig. 2 erläutert. Fig. 2 zeigt die Vorrichtung 1 gemäß Fig. 1, wenn die Hülle 2 geplatzt oder der Vorrat aufgebraucht ist. In diesem Falle tritt das Füllgut 3 aus der Ausstoßöffnung 5 in einem Strang 3a aus, dessen Durchmesser kleiner als D und ähnlich dem Durchmesser d der Ausstoßöffnung 5a ist, da der den Rückstau und somit die Durchmesservergrößerung bewirkende Widerstand der Hülle 2 fehlt. Mit dem Sensor 19 wird an der Messstelle 19a keine Durchmesservergrößerung bzw. kein größerer Durchmesser D festgestellt und als Fehler interpretiert, der zum Abschalten der Vorrichtung 1 führt, so dass nur sehr wenig Füllgut ohne Hülle ausgestoßen wurde.

Versagt die Einschnürvorrichtung 14, so wird auch an der Messstelle 20a des Sensors 20 keine Einschnürung im vorbestimmten Intervall festgestellt und ebenfalls als Fehler interpretiert, der zum Abschalten der Vorrichtung 1 führt.

Platzt die Hülle 2 während der Weiterverarbeitung, so wird durch die Messstelle 20a eine Durchmesserverringerung und/oder eine Durchmesservergrößerung durch auslaufendes bzw. herausquellendes Füllgut 3 festgestellt.

Zusätzlich werden auch, falls vorhanden, die Messstellen 21 a und 22a der Sensoren 21 und 22 abgefragt und, falls dort eine fehlende Bewegung festgestellt wird, dies ebenfalls als Fehler interpretiert, der zur Abschaltung der Vorrichtung 1 führt.

Die Abschaltung der Vorrichtung 1 oder nur bestimmter Teile davon, kann sofort erfolgen oder erst dann, wenn eine bestimmte Tendenz eindeutig zu erkennen ist, um Zufallsmessungen auszuschalten.

Die weiteren Sensoren können vom üblicherweise für derartige Mess- und Überwachungsaufgaben eingesetzten Typ sein. Der Sensor 19 ist jedoch bevorzugt ebenfalls ein Flächenerkennungslasersensor zur breitflächigen Erkennung, wie er auch bevorzugt für die erste Sensoreinrichtung 18 eingesetzt wird. Die Sensoren 20 bis 22 sind bevorzugt die oben beschriebenen laseroptischen Triangulationssensoren.

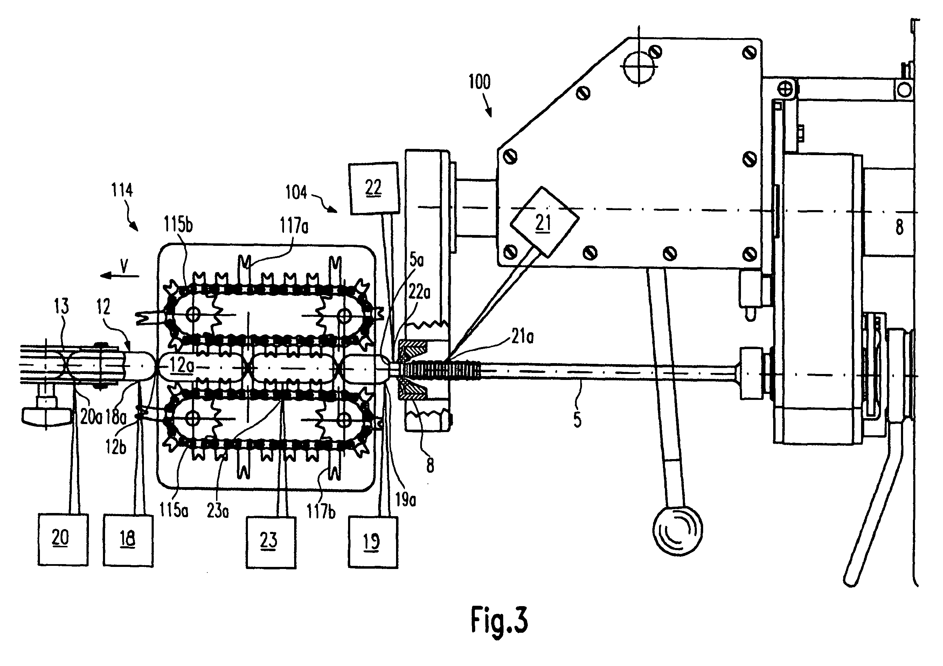

Fig. 3 zeigt ein weiteres Ausführungsbeispiel einer erfindungsgemäß ausgerüsteten Vorrichtung 100, die sich lediglich durch eine konstruktiv abweichende Einschnüreinrichtung 114 vom Ausführungsbeispiel gemäß den Fig. 1 und 2 unterscheidet, so dass gleiche bzw. vergleichbare Bauteile mit den gleichen Bezugszeichen gekennzeichnet und nicht nochmals erläutert sind.

Die Einschnüreinrichtung 114 enthält Verdrängerketten 115a und 115b, die mit einer Vielzahl von Verdrängerflügeln 117a bzw. 117b ausgerüstet sind und diese parallel zur Abzugsrichtung V der Transporteinrichtung 13 bewegen. Die Einschnürungen 12b zum Unterteilen des Füllguts 12 in einzelne Abschnitte 12a sind jedoch wie an hand Fig. 1 beschrieben ausgebildet.

Die Überwachungseinrichtung 104 der Vorrichtung 100 enthält die bereits beschriebenen Sensoren 18 bis 22 und zusätzlich einen sechsten Sensor 23, der eine Messstelle 23a im Inneren der Einschnürvorrichtung 114 aufweist. Der Sensor 23 mit seiner Messstelle 23a wirkt wie die Sensoren 19 bzw. 20, kann jedoch den Zustand des Füllguts 3 und somit der Hülle bereits innerhalb der Einschnürvorrichtung 114 feststellen, so dass die Verschmutzungsgefahr der Einschnüreinrichtung 114 vermindert wird. Der Sensor 23 kann jeder für den beschriebenen Verwendungszweck bekannte Sensor, einschließlich der oben erwähnten optischen bzw. Lasersensoren sein.

In Abwandlung der beschriebenen und gezeichneten Ausführungsbeispiele kann die Erfindung auch für andere Befüllvorrichtungen und/oder für andere Füllgüter eingesetzt werden. Beispielsweise ist die Erfindung für ein strangartiges Abpacken einer Marzipanmasse geeignet. Die Konstruktion der Vorrichtung beispielsweise im Bereich der Transportvorrichtung und/oder im Bereich der Bremse und/oder im Bereich des Füllrohrs kann verändert werden. Es ist weiterhin möglich, statt der beschriebenen Einschnüreinrichtungen eine Einrichtung vorzusehen, bei der das Füllgut zum Ausbilden der Einschnürung in Axialrichtung verdrängt wird, so dass dort ein Clip- oder Bindeverschluss angebracht werden kann. Weiterhin kann die Überwachungseinrichtung auch lediglich den die Form und/oder den Verlauf feststellenden Sensor enthalten.

## Patentansprüche

1. Verfahren zum Befüllen einer Hülle (2) mit einem pastösen Füllgut (3), insbesondere einer Wursthülle mit Wurstmasse, bei dem das Füllgut (3) in die Hülle (2) ausgestoßen, die Hülle (2) an Einschnürstellen (12b) zum Ausbilden von Abschnitten (12a) eingeschnürt, die über die Einschnürstellen (12b) zusammenhängenden Abschnitte (12a) als Füllgutstrang (12) abtransportiert, der Zustand der Hülle (2) über den Zustand des ausgestoßenen Füllguts (3) überwacht und ein Fehlersignal bei einer Abweichung von einem Sollwert (200) erzeugt wird, **dadurch gekennzeichnet, dass** zum Überwachen des Zustands der Hülle (2) ein Istwert (203) einer Form und/oder eines Verlaufs des Zustands des ausgestoßenen Füllgutes (3) über die Einschnürstelle (12b) und den Abschnitt (12a) nach dem beidseitigen Einschnüren des Abschnitts (12a) festgestellt wird.

2. Verfahren nach Anspruch 1, **dadurch gekennzeichnet, dass** als Istwert (203) eine Istkontur oder eine Istfläche axial über den Abschnitt (12a) und die Einschnürstelle (12b) festgestellt und mit dem Sollwert in Form einer Sollkontur oder Sollfläche verglichen wird.

3. Verfahren nach Anspruch 1 oder 2, **dadurch gekennzeichnet, dass** der Sollwert (200) aus Betriebsparametern des Befüllvorgangs errechnet wird.

4. Verfahren nach einem der Ansprüche 1 bis 3, **dadurch gekennzeichnet, dass** der Sollwert als Hüllkurve mit einer oberen und einer unteren Grenzkurve (201, 202) bereitgestellt wird.

5. Verfahren nach einem der Ansprüche 1 bis 4, **dadurch gekennzeichnet, dass** der Istwert (203) kontinuierlich festgestellt wird.

6. Vorrichtung zum Befüllen einer Hülle (2) mit einem pastösen Füllgut (3), insbesondere einer Wursthülle mit Wurstmasse, mit einem mit einer Ausstoßöffnung (5a) versehenen Füllrohr (5), einer Einschnüreinrichtung (14, 114) zum Erzeugen eines Füllgutstrangs (12) aus einzelnen Abschnitten (12a), die über Einschnürungen (12b) miteinander verbunden sind, einer Transporteinrichtung (13) zum Transportieren des Füllgutstrangs (12), einer Überwachungseinrichtung (4,104) zum Feststellen des Zustands der Hülle (2) über den Zustand des ausgestoßenen Füllguts (3) und einer Steuereinrichtung zum Erzeugen eines Fehlersignals, **dadurch gekennzeichnet, dass** die Überwachungseinrichtung (4,104) eine nach der Einschnüreinrichtung (14, 114) angeordnete Sensoreinrichtung (18) zum Feststellen eines Istwertes (203) einer Form und/oder eines Verlaufs des Zustands des ausgestoßenen Füllgutes (3) über Abschnitt (12a) und Einschnürung (12b) enthält.

7. Vorrichtung nach Anspruch 6, **dadurch gekennzeichnet, dass** die Sensoreinrichtung (18) zum Feststellen einer Istkontur oder Istfläche ausgebildet ist.

8. Vorrichtung nach Anspruch 6 oder 7, **dadurch gekennzeichnet, dass** die Sensoreinrichtung (18) ein Lasersensorsystem, insbesondere einen reflektierenden Flächenerkennungslasersensor, enthält.

## Claims

1. Process for filling a casing (2) with a pasty filling material (3), in particular a sausage casing with sausage meat, in which the filling material (3) is discharged into the casing (2), the casing (2) is tied at tying points (12b) to form sections (12a), the sections (12a) connected via the tying points (12b) are transported away as a filling material cord (12), the status of the casing (2) is monitored via the status of the discharged filling material (3) and an error signal is produced in the event of a deviation from a theoretical value (200), **characterised in that** to monitor the status of the casing (2), an actual value (203) of a shape and/or of a path of the status of the discharged filling material (3) is established via the tying point (12b) and the section (12a) after tying the section (12a) on both sides.

2. Process according to claim 1, **characterised in that** an actual contour or an actual surface area is established as an actual value (203) axially via the section (12a) and the tying point (12b) and compared with the theoretical value in the form of a theoretical contour or theoretical surface area.

3. Process according to claim 1 or 2, **characterised in that** the theoretical value (200) is calculated from operating parameters of the filling process.

4. Process according to one of claims 1 to 3, **characterised in that** the theoretical value is provided as a casing curve with an upper and a lower limiting curve (201,202).

5. Process according to one of claims 1 to 4, **characterised in that** the actual value (203) is established continuously.

6. Device for filling a casing (2) with a pasty filling material (3), in particular a sausage casing with sausage meat, having a filling pipe (5) provided with a discharge opening (5a), a tying device (14, 114) to produce a filling material cord (12) comprising individual sections (12a) which are connected to one another via ties (12b), a transport device (13) for transporting the filling material cord (12), a monitoring device (4, 104) to establish the status of the casing (2) via the status of the discharged filling material (3) and a control device for producing an error signal, **characterised in that** the monitoring device (4, 104) contains a sensor device (18) arranged downstream of the tying device (14, 114) to establish an actual value (203) of a shape and/or of a path of the status of the discharged filling material (3) via section (12a) and tie (12b).

7. Device according to claim 6, **characterised in that** the sensor device (18) is designed to establish an actual contour or actual surface area.

8. Device according to claim 6 or 7, **characterised in that** the sensor device (18) contains a laser sensor system, in particular a reflecting surface area-recognition laser sensor.

## Revendications

1. Procédé de remplissage d'un boyau (2) par un produit de remplissage pâteux (3), en particulier d'un boyau de saucisse par de la chair à saucisse, dans lequel le produit de remplissage (3) est éjecté dans le boyau (2), le boyau (2) est rétréci en des points d'étranglement (12b) pour la réalisation de sections (12a), les sections (12a), cohérentes par l'intermédiaire des points d'étranglement (12b), sont évacuées sous forme de cordon de produit de remplissage (12), l'état du boyau (2) est contrôlé par l'intermédiaire de l'état du produit de remplissage (3) éjecté et un signal d'erreur est généré en cas d'écart par rapport à une valeur de consigne (200), **caractérisé en ce que**, pour le contrôle de l'état du boyau (2), une valeur effective (203) d'une forme et/ou d'une allure de l'état du produit de remplissage éjecté (3) par rapport au point d'étranglement (12b) et à la section (12a) est établie après le rétrécissement bilatéral de la section (12a).

2. Procédé suivant la revendication 1, **caractérisé en ce qu'**un contour effectif ou une surface effective est établi en tant que valeur effective (203) dans la direction axiale par rapport à la section (12a) et au point d'étranglement (12b) et comparé à la valeur de consigne en forme d'un contour de consigne ou d'une surface de consigne.

3. Procédé suivant l'une des revendications 1 et 2, **caractérisé en ce que** la valeur de consigne (200) est calculée à partir de paramètres de fonctionnement de l'opération de remplissage.

4. Procédé suivant l'une des revendications 1 à 3, **caractérisé en ce que** la valeur de consigne est fournie sous forme de courbe enveloppante avec une courbe limite supérieure et une courbe limite inférieure (201, 202).

5. Procédé suivant l'une des revendications 1 à 4, **caractérisé en ce que** la valeur effective (203) est établie en continu.

6. Dispositif de remplissage d'un boyau (2) par un produit d remplissage pâteux (3), en particulier d'un boyau de saucisse par de la chair à saucisse, comprenant un tube de remplissage (5) muni d'une ouverture d'éjection (5a), un dispositif d'étranglement (14, 114) pour produire un cordon de produit de remplissage (12) constitué de sections individuelles (12a), qui sont reliées entre elles par l'intermédiaire d'étranglements (12b), un dispositif de transport (13) pour le transport du cordon de produit de remplissage (12), un dispositif de contrôle (4, 104) pour établir l'état du boyau (2) par l'intermédiaire de l'état du produit de remplissage éjecté (3), et un dispositif de commande pour générer un signal d'erreur, **caractérisé en ce que** le dispositif de contrôle (4, 104) comporte un dispositif de détection (18) disposé après le dispositif d'étranglement (14, 114), pour établir une valeur effective (203) d'une forme et/ou d'une allure de l'état du produit de remplissage (3) éjecté par rapport à la section (12a) et à l'étranglement (12b).

7. Dispositif suivant la revendication 6, **caractérisé en ce que** le dispositif de détection (18) est réalisé pour établir un contour effectif ou une surface effective.

8. Dispositif suivant l'une des revendications 6 et 7, **caractérisé en ce que** le dispositif de détection (18) comporte un système de détection au laser, en particulier un capteur laser d'identification de surfaces réfléchissant.
